# Europäisches Patentamt
# European Patent Office
# Office européen des brevets

(19)

(11) Numéro de publication: **0 113 419**
**B1**

(12) ## FASCICULE DE BREVET EUROPÉEN

(45) Date de publication du fascicule du brevet:
24.09.86

(51) Int. Cl.⁴: **B 21 D 21/00**

(21) Numéro de dépôt: **83111868.2**

(22) Date de dépôt: **26.11.83**

(54) Procédé et dispositif de tronçonnage d'une pièce tubulaire de grand diamètre en matériau rigide notamment à section ovalisée, telle qu'un tuyau en fonte.

(30) Priorité: **10.12.82 FR 8220733**

(43) Date de publication de la demande:
**18.07.84 Bulletin 84/29**

(45) Mention de la délivrance du brevet:
**24.09.86 Bulletin 86/39**

(84) Etats contractants désignés:
**DE GB**

(56) Documents cité:
**FR-A-2 014 750**
**FR-A-2 138 965**
**FR-A-2 377 264**
**GB-A-2 065 013**

(73) Titulaire: **PONT- A-MOUSSON S.A., 91, Avenue de la Libération, F-54017 Nancy (FR)**

(72) Inventeur: **Fuminier, Claude Berthélémy, 63, rue du Bois le Prêtre, F-54700 Pont- A-Mousson (FR)**

(74) Mandataire: **Puit, Thierry, c/o Centre de Recherches de Pont- à- Mousson B.P. 28, F-54703 Pont- à- Mousson Cedex (FR)**

LIBER, STOCKHOLM 1986

## Description

La présente invention a pour objet un procédé et un dispositif de tronçonnage d'une pièce tubulaire de grand diamètre en matériau rigide, notamment à section ovalisée, telle qu'un tuyau en fonte, en acier, en matière plastique ou en fibro-ciment.

On connaît un procédé et un dispositif de tronçonnage universels, capables de tronçonner des tuyaux de tous diamètres, en particulier des tuyaux en fonte, avec le cas échéant l'exécution d'un chanfrein de profil prédéterminé. Suivant ce procédé, on associe chaque outil de coupe à un galet en les jumelant mécaniquement de façon que l'arrête de l'outil et la génératrice de contact entre le galet rotatif et la paroi extérieure de la pièce tubulaire à tronçonner soient contenues sensiblement dans un même plan radial passant par l'axe longitudinal de la pièce tubulaire. Cette disposition présente l'avantage de maintenir constantes les pénétrations de l'outil de coupe dans la paroi de la pièce tubulaire si le rayon de courbure de celle-ci varie, par exemple si elle est ovalisée ou elliptique. On obtient donc de la sorte des chanfreins parfaitement réguliers sur tout le pourtour d'une pièce à section ovalisée.

La tronçonneuse pour la mise en oeuvre de ce procédé peut tronçonner des tuyaux dans une gamme de diamètres très étendue et est donc en ce sens universelle.

Une telle machine donne satisfaction, mais compte tenu du nombre de galets et de vérins qu'elle comporte, qui sont répartis sur le pourtour de la pièce tubulaire, à l'extérieur de celle-ci, elle présente un encombrement d'autant plus important que le diamètre de la pièce est plus élevé, et est relativement onéreuse.

L'invention a pour but de réaliser un procédé et un dispositif plus simple et par conséquent moins onéreux et moins encombrant, ce qui est particulièrement intéressant pour le tronçonnage de tuyaux de grands diamètres, par exemple supérieurs à 700 mm mais est applicable à tous diamètres à partir d'un diamètre minimal prédéterminé, par exemple de l'ordre de 300 mm.

Dans le procédé visé par l'invention, pour le tronçonnage d'une pièce tubulaire de diamètre minimal prédéterminé, notamment un tuyau en fonte, on utilise un bâti de support de cette pièce pourvu de galets destinés à recevoir l'extrémité à tronçonner de la pièce, des moyens étant prévus pour entraîner l'un des galets en rotation afin de faire tourner la pièce tubulaire autour de son axe tout en la maintenant fixe en translation, le tronçonnage étant exécuté au moyen d'au moins un outil de coupe jumelé radialement à un galet.

Suivant l'invention, ce procédé est caractérisé en ce qu'on dispose les galets porteurs de la pièce uniquement sous la partie inférieure de celle-ci, en jumelant l'un au moins de ces galets avec un outil de coupe à enlèvement de matière la pièce appliquée sur ces galets pendant sa rotation et la coupe de son extrémité, au moyen d'au moins un galet presseur introduit à l'intérieur de la pièce, en appui sur cette dernière, puis après le tronçonnage, on escamote le galet intérieur presseur pour dégager la pièce tronçonnée.

Ainsi, au lieu de répartir les galets sur tout le pourtour de la section tubulaire à tronçonner comme dans la tronçonneuse universelle antérieure, on concentre les galets porteurs au-dessous de cette section, c'est-à-dire au-dessous d'un plan horizontal passant par l'axe de la pièce tubulaire. On met à profit le grand diamètre du tuyau pour loger à l'intérieur de celui-ci au moins un galet presseur ou "pinceur", qui a pour fonction de maintenir l'extrémité du tuyau appliquée sur les galets de support pendant l'exécution du tronçonnage.

En concentrant les galets sous l'extrémité du tuyau, on réduit les dimensions du bâti de support des galets, donc son encombrement et son poids, ainsi que le nombre des galets et des organes d'entraînement de ceux-ci. De ce fait, le prix de revient de la machine de tronçonnage est aussi considérablement diminué.

En pratique, le diamètre minimal du tuyau susceptible d'être tronçonné dans ces conditions est d'environ 300 mm, tandis que son diamètre maximal peut dépasser 1000 mm.

Cependant, à une valeur donnée de l'angle de coupe de l'outil (c'est-à-dire l'angle entre la tangente à la surface à tronçonner au point de contact de l'arête tranchante de l'outil sur celle-ci et la perpendiculaire à cette tangente audit point de contact), correspond une gamme déterminée de diamètres de tuyaux acceptables, compte tenu que pour une exécution satisfaisante de la coupe, l'angle de coupe ne doit pas varier au-delà de limites données de part et d'autre de ladite valeur donnée. Ainsi, le tronçonnage de tuyaux en fonte à graphite sphéroïdal (fonte ductile), s'obtient avec des outils de coupe dont l'angle de coupe idéal se situe aux environs de - 3 degrés avec une tolérance de ± 2 à 3 degrés autour de cette valeur. On comprend donc qu'à partir d'un réglage initial de - 3 degrés pour l'angle de coupe, on puisse réaliser convenablement le tronçonnage d'une série de tuyaux dont les diamètres varient, tant que l'angle de coupe ne dépasse pas les limites de tolérance ci-dessus.

De ce fait, lorsqu'on veut tronçonner des tuyaux pour lesquels l'angle de coupe dépasserait ces tolérances, il est nécessaire de procéder à un nouveau réglage de l'angle de coupe de l'outil, de façon manuelle ou automatique (par exemple au moyen d'un vérin à vis).

On peut ainsi, par réglages successifs des positions angulaires de l'outil, tronçonner des gammes de tuyaux dont les diamètres sont compris sensiblement entre les limites indiquées ci-dessus, la limite inférieure d'environ 300 mm étant en pratique imposée par la possibilité d'introduire un galet presseur à l'intérieur du tuyau.

D'autres particularités et avantages de l'invention apparaîtront au cours de la description qui va suivre, faite en référence aux dessins annexés qui en illustrent plusieurs formes de réalisation à titre d'exemples non limitatifs.

La Figure 1 est une vue en élévation simplifiée en bout d'une première forme de réalisation d'un dispositif de tronçonnage de pièces tubulaires.

La Figure 2 est une vue simplifiée en élévation longitudinale avec arrachements du dispositif de la Figure 1, le galet intérieur étant en place dans le tuyau.

La Figure 2A est une vue de détail à échelle agrandie du dispositif de la Figure 2.

La Figure 3 est une vue en élévation analogue à la Figure 2 montrant le galet de pincement escamoté à l'extérieur de l'extrémité tronçonnée du tuyau.

La Figure 4 est une vue en perspective du dispositif de tronçonnage représenté avec le galet presseur et de pincement en place à l'intérieur de la pièce tubulaire.

La Figure 5 est une vue à échelle agrandie par rapport aux Figures précédentes, mi-coupe longitudinale mi-élévation d'un couple formé par un outil de coupe et le galet associé en appui sur la paroi de la pièce tubulaire à tronçonner, dans le dispositif des Figures 1 à 4.

Les Figures 6 et 7 sont des vues schématiques en élévation en bout illustrant deux variantes de réalisation du dispositif de tronçonnage.

La Figure 8 est une vue schématique en élévation en bout d'une autre forme de réalisation du dispositif de tronçonnage selon l'invention.

La Figure 9 est une vue en élévation partielle à échelle agrandie par rapport à la Figure 8 montrant l'agencement des outils de coupe de ce mode de réalisation.

La Figure 10 est une vue en élévation en bout analogue à la Figure 1 mais dans laquelle le dispositif est réglé pour le tronçonnage d'une pièce tubulaire de diamètre nettement inférieur à celui de la pièce visible à la Figure 1.

Le dispositif représenté aux dessins est destiné à exécuter le tronçonnage à longueur déterminée d'une pièce tubulaire T, avec de préférence mais non nécessairement, un chanfrein de profil choisi sur l'extrémité tronçonnée, la pièce tubulaire T étant réalisée en un matériau rigide tel que de la fonte, en particulier de la fonte ductile, de l'acier, de la matière plastique ou du fibro-ciment, d'un diamètre minimal prédéterminé.

La pièce T est par exemple un tuyau en fonte ductile du type à emboîtement.

D'autre part, cette pièce peut être de section aussi bien rigoureusement circulaire qu'ovalisée ou même elliptique.

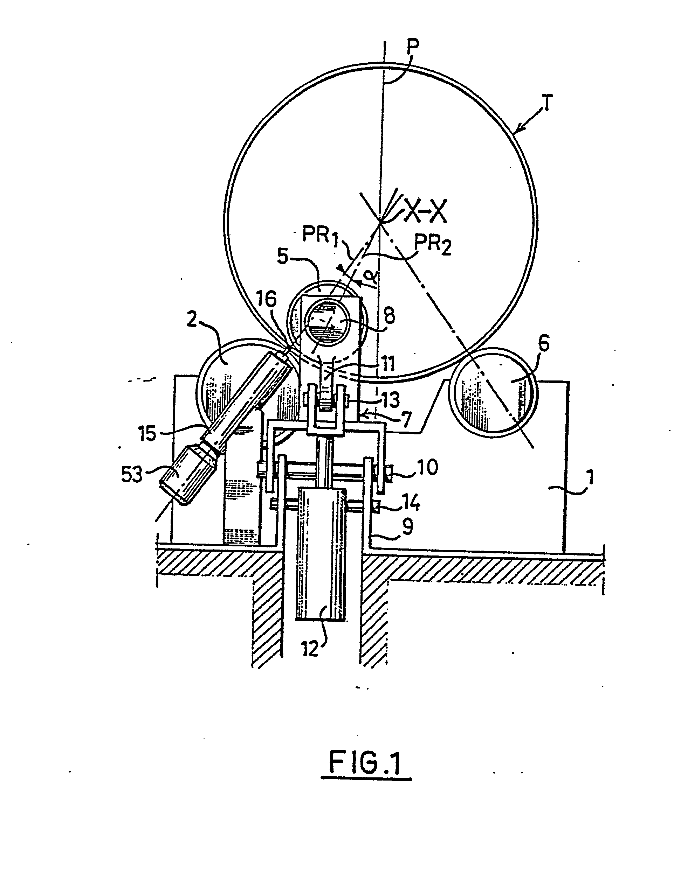

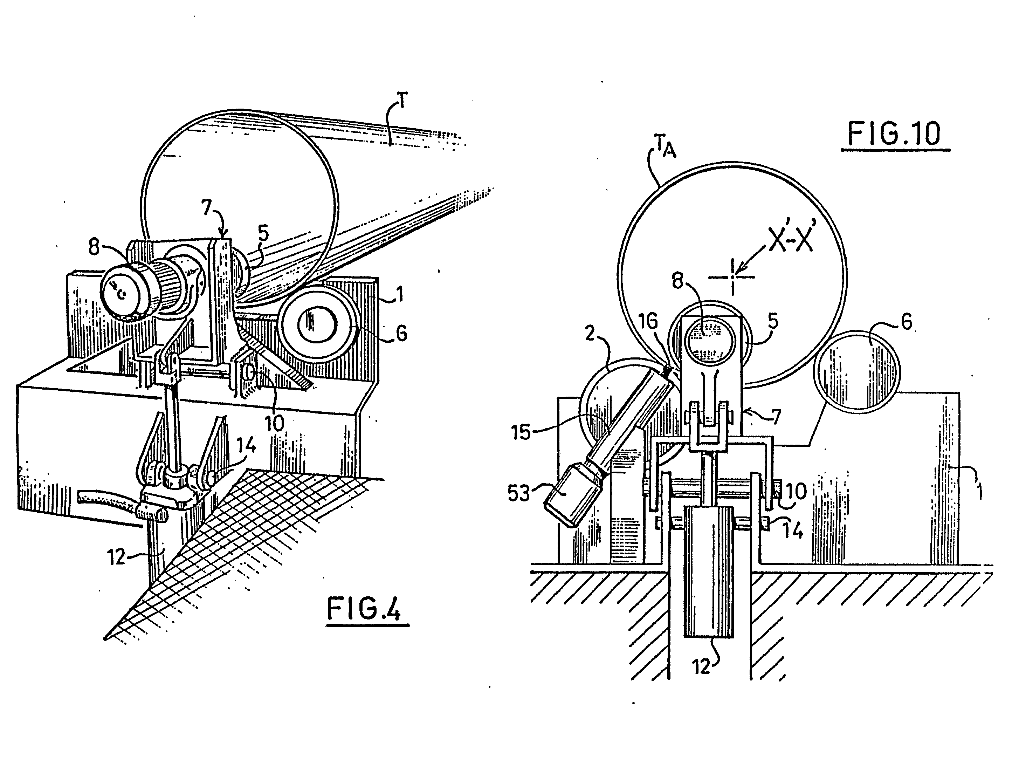

On décrira tout d'abord une première forme de réalisation du dispositif de tronçonnage en référence aux Figures 1 à 5.

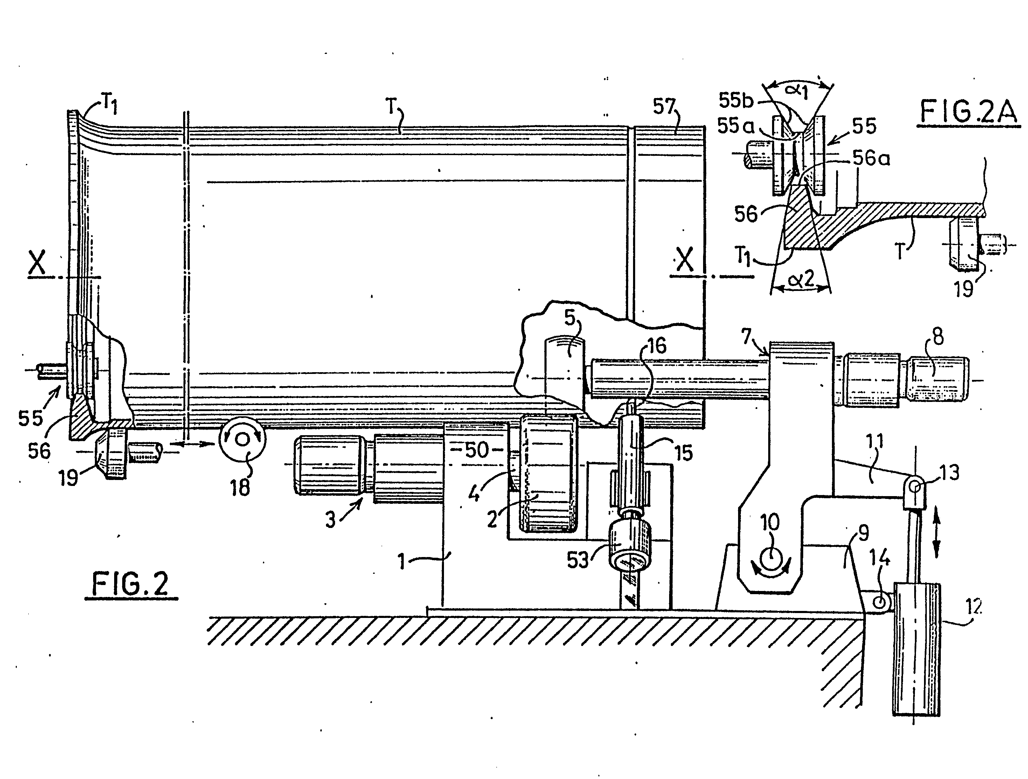

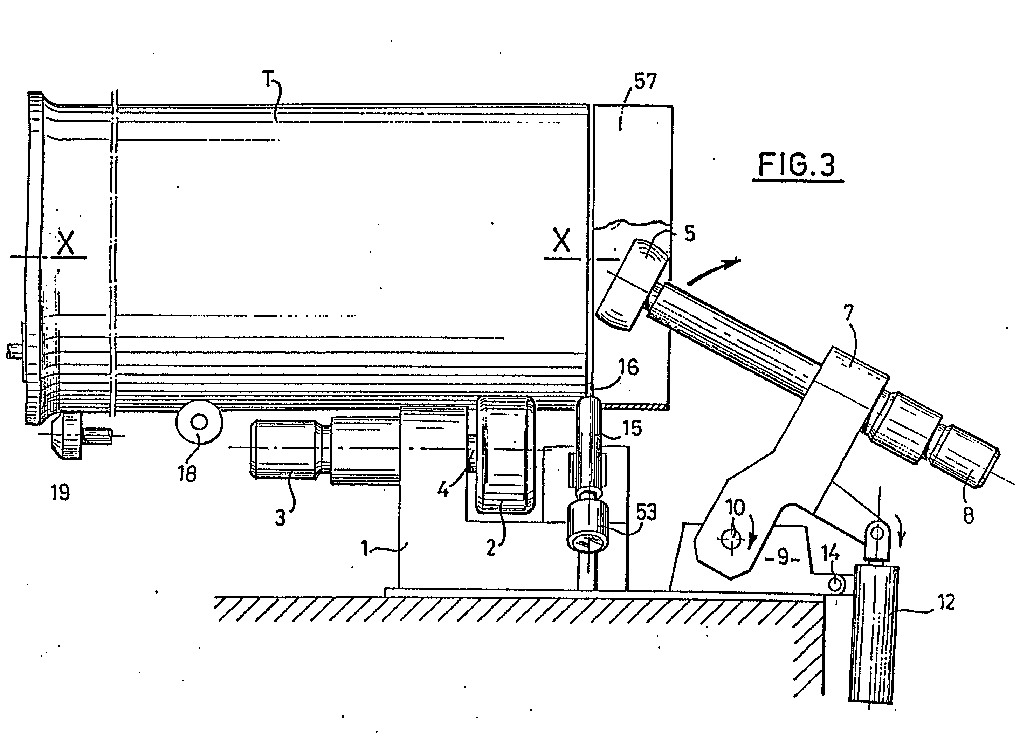

Le dispositif comprend un bâti fixe 1 pourvu de deux galets 2, 6 destinés à supporter l'extrémité à tronçonner d'une pièce tubulaire T, et qui sont disposés symétriquement par rapport à l'axe longitudinal X-X de la pièce T placée horizontalement. Cette pièce peut être notamment un tuyau en fonte à emboîtement $T_1$ (Figures 2 et 3). Des moyens complémentaires, qui seront décrits plus loin, sont prévus pour soutenir et immobiliser en translation axiale la pièce T à son extrémité opposée à celle qui doit être tronçonnée.

Les deux galets porteurs 2 et 6 sont placés au-dessous d'un plan horizontal passant par l'axe X-X de la pièce T. Ils ont leurs axes de rotation parallèles à l'axe X-X et symétriques par rapport au plan vertical axial P de la pièce T. Le galet 2 est moteur et le galet 6 est monté fou, sa position radiale dans un plan passant par l'axe X-X et par l'axe de ce galet pouvant être réglée par tout moyen approprié, par exemple par un vérin à vis, afin d'ajuster la position de ce galet au diamètre de la pièce à tronçonner.

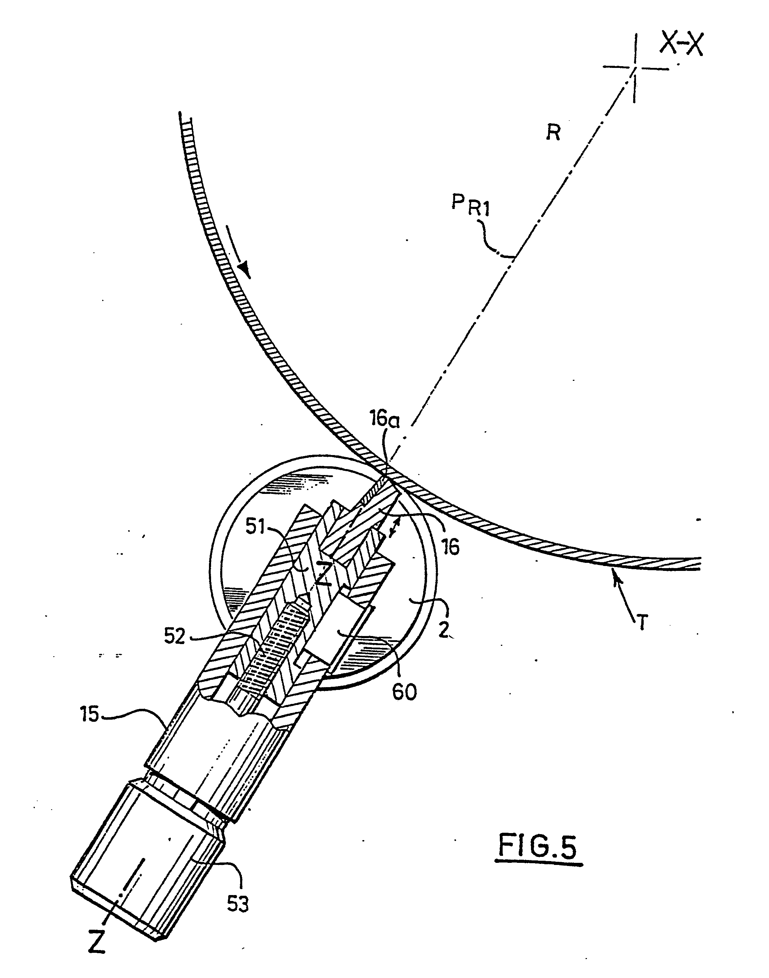

Le galet 2 est jumelé à un outil de coupe 16 comme on le voit en particulier à la Figure 5.

L'une des extrémités de l'arbre d'entraînement 4 du galet 2 est montée sur un montant 50 du bâti 1 du support de l'outil de coupe 16 associé, et l'arbre 4 peut être entraîné en rotation à une vitesse constante réglable par un motoréducteur 3. L'outil 16 est monté coulissant à l'intérieur d'un manchon 15 monté sur le bâti 1. L'outil 16 est fixé de manière connue en soi à l'extrémité d'un écrou 51 (Figure 5) susceptible de coulisser dans le manchon ou fourreau cylindrique 15. Une vis 52 est engagée axialement dans l'écrou 51 et peut être entraînée en rotation par un accouplement solidaire de l'arbre de sortie d'un moteur 53, du type pas à pas ou autre, avec codeur angulaire. L'écrou porte-outil 51 est claveté dans le fourreau 15 par un organe 60 lui assurant un degré de liberté en translation dans ce fourreau, et le moteur d'entraînement 53 permet, selon son sens de rotation, de faire avancer ou de reculer l'outil 16, comme symbolisé par la double flèche portée sur la Figure 5.

Pour un diamètre donné du tuyau T à tronçonner, comme illustré à la Figure 5, l'arête 16A de l'outil 16 est située dans un plan radial $P_{R1}$ passant par l'axe X-X et contenant l'axe Z-Z de déplacement de l'outil 16. Sur la Figure 5, le plan radial $P_{R1}$ a pour trace un rayon de la section circulaire du tuyau T. Cependant, ceci n'est plus vérifié dans le cas où le diamètre du tuyau à tronçonner varie, dans la mesure où l'inclinaison de l'outil 16 n'est pas modifiée.

L'arête tranchante 16A est constituée de façon connue en soi par exemple par une pastille en carbure de tungstène de profil approprié, non seulement au tronçonnage d'une pièce tubulaire (angle de coupe-dépouille), mais aussi à celui du profil souhaité (chanfrein, congé, etc.) sur la partie externe de la pièce T du côté de l'usinage.

En combinaison avec les galets 2 et 6, disposés uniquement sous la partie inférieure de la pièce T à tronçonner, c'est-à-dire au-dessous d'un plan horizontal contenant l'axe X-X, le dispositif prévoit au moins un galet presseur 5 de maintien de la pièce T en appui sur les galets porteurs 2, 6. Le galet 5, dont l'axe est parallèle à l'axe X-X de la pièce T, est monté sur un châssis 7 pouvant pivoter sur un socle fixe 9 autour d'un axe horizontal 10 perpendiculaire à l'axe X-X de la pièce T, et placé devant l'extrémité de celle-ci, hors de la pièce T à tronçonner. La partie supérieure du châssis 7 est solidarisée avec un support tubulaire contenant l'axe d'entraînement du galet 5, un motoréducteur 8 d'entraînement du galet 5 en rotation étant fixé à ce support (Figures 2 et 3). Un vérin 12 à double effet est monté articulé autour d'un axe 14 parallèle à l'axe 10 et solidaire du socle 9, tandis que l'extrémité de sa tige est articulée sur un levier 11 solidaire du châssis 7 autour d'un axe 13 parallèle aux axes 10 et 14.

On comprend que cet agencement permet d'introduire le galet 5 à l'intérieur de l'extrémité à tronçonner de la pièce T (position de la Figure 2) pour maintenir celle-ci appliquée sur les galets porteurs 2 et 6 pendant le tronçonnage par l'outil 16, puis à l'escamoter à l'extérieur de l'extrémité tronçonnée (position de la Figure 3) par actionnement du vérin 12, qui fait pivoter le châssis 7 et le galet 5 à l'extérieur du tuyau T par basculement autour de l'axe 10. En même temps, le vérin 12 pivote lui-même autour de l'axe 14. Le galet 5 peut donc basculer autour de l'axe 10.

Suivant une particularité le galet presseur intérieur 5 ou de "pincement" de la pièce T sur les galets porteurs 2, 6 est placé entre ceux-ci et à une faible distance angulaire $\alpha$ (Figure 1) du galet 2 jumelé à l'outil de coupe 16. Plus précisément, le galet 5 est positionné de façon que le plan radial $P_{R1}$ passant par l'axe X-X de la pièce T et par l'axe du galet porteur 2 soit écarté de la distance angulaire $\alpha$ du plan radial $P_{R2}$ passant par l'axe de ce galet intérieur 5. Le galet presseur 5 peut donc basculer autour de l'axe 10 (Fig. 2 et 3) dans un plan vertical contenant l'axe du vérin d'actionnement 12, et perpendiculaire à l'axe 14, ce plan vertical étant situé entre le plan médian axial P et le plan vertical passant par la ligne de contact entre le galet 2 et la paroi du tuyau T.

Par ailleurs, la pièce tubulaire T est supportée, à son emboîtement $T_1$, par des galets de retenue axiale ou d'immobilisation en translation 19 et 55 (Figures 2 et 2A). L'emboîtement $T_1$ est ainsi en appui sur deux galets porteurs 19 (dont l'un seulement est visible aux dessins), et maintenu axialement par un galet 55, les axes de rotation de ces galets étant horizontaux et parallèles à l'axe X-X. Le galet intérieur 55 présente une gorge périphérique centrale 55a agencée pour recevoir un bourrelet annulaire 56 formant une partie du profil intérieur de l'emboîtement $T_1$. La section de la gorge centrale 55a est trapézoïdale (Figure 2A), avec un angle d'ouverture $\alpha 1$ sensiblement supérieur à l'angle d'ouverture $\alpha 2$ du bourrelet trapézoïdal 56. Cette configuration permet de garantir le maintien axial et sans jeu du tuyau T pendant son tronçonnage. En effet, un éventuel jeu axial pourrait entraîner la rupture de l'outil de coupe 16. Le bourrelet annulaire 56 porte ainsi par ses arêtes, sur le flanc 55b de la gorge 55a, et non sur le fond de celle-ci. En effet, si l'on faisait porter la surface intérieure annulaire 56a du bourrelet 56 sur le fond de la gorge 55a, il faudrait que les largeurs de ce fond et de la surface intérieure 56a soient rigoureusement identiques pour écarter tout risque de jeu axial du tuyau T en cours de rotation. Or, les tolérances de fabrication des tuyaux, notamment en fonte, ne garantissent pas un ajustage aussi rigoureux.

Enfin, les moyens de support du tuyau T sont complétés par un diabolo 18 (Figures 2 et 3).

La mise en oeuvre du dispositif de tronçonnage qui vient d'être décrit est la suivante.

On dispose la pièce tubulaire T en appui sur les galets 19 d'une part et 2,6 d'autre part, puis on actionne le vérin 12, à partir de la position escamotée du galet presseur 5 représentée à la Figure 3, pour faire basculer l'ensemble du châssis 7 et du galet 5 jusqu'à la position des Figures 1 et 2, dans laquelle le galet 5 est à l'intérieur de l'extrémité à tronçonner de la pièce T et presse celle-ci contre les galets porteurs 2 et 6. L'outil 16 étant convenablement orienté angulairement en prévision d'une gamme de diamètres prédéterminée de tuyaux à tronçonner, de façon que son angle de coupe reste dans les limites de tolérance indiquées précédemment lorsqu'on change le diamètre du tuyau, on met en route les motoréducteurs 3 et 8 pour entraîner en rotation les galets correspondants 2 et 5 et par conséquent également la pièce T. En même temps, on met en marche le moteur 53 qui assure la progression pas à pas (ou continue) de l'outil 16 à travers la paroi du tuyau T, au fur et à mesure de la rotation de ce dernier.

Au cours du tronçonnage, le galet presseur interne 5 exerce sur la paroi interne de la pièce tubulair T un effort antagoniste de celui qui est exercé par l'outil 16 sur la paroi externe, et par conséquent permet de bien appliquer la section tubulaire à tronçonner sur l'arête coupante de l'outil de coupe 16.

Mais aussi, le décalage angulaire $\alpha$ entre le plan axial $P_{R2}$ du galet presseur 5 et le plan radial $P_{R1}$ du galet porteur 2 et de l'outil de coupe 16 (Fig. 1) permet d'appliquer la pièce tubulaire T sur les deux galets porteurs extérieurs 2 et 6, à l'encontre de l'effort radial centripète de l'outil de coupe 16 qui tendrait à faire perdre le contact du tuyau T avec ses galets porteurs 2 et 6. La combinaison des trois galets 2, 6 et 5 comportant ce décalage angulaire $\alpha$ assure donc un équilibre stable du tuyau T sur les galets porteurs 2 et 6 au cours de la coupe.

Il est à noter que, sans ce décalage angulaire $\alpha$, le galet presseur intérieur 5 supposé placé dans le plan radial $P_{R1}$ jouerait avec le galet porteur extérieur 2 un rôle de pincement de la paroi tubulaire, et ne parviendrait pas à empêcher un soulèvement de la section tubulaire à tronçonner, lui faisant perdre le contact avec l'autre galet porteur 6. Pour rétablir la stabilité du contact avec le galet porteur 6, il faudrait alors un deuxième galet presseur intérieur, par exemple dans le prolongement radial du galet 6 ou avec un léger décalage angulaire par rapport au plan radial contenant l'axe du galet 6.

Lorsque le tronçonnage est terminé, l'extrémité tronçonnée 57 (Figure 2) est évacuée par des moyens non représentés, on arrête les moteurs 3, 8 et 17, et on déclenche le vérin 12 de manière à escamoter le galet 5 à l'extérieur du tuyau T par basculement du châssis 7 autour de l'axe 10, jusqu'à la position de la Figure 3.

On peut alors procéder à l'opération de tronçonnage suivante.

La combinaison des trois galets 2 et 6 porteurs et 5 presseur est adaptable à des tuyaux T de différents diamètres, en déplaçant l'un des galets seulement. C'est ainsi que l'on a représenté à la Figure 10 la tronçonneuse qui vient d'être décrite mais sur laquelle a été disposé un tuyau à tronçonner TA de diamètre nettement inférieur à celui du tuyau T des Figures 1 à 3.

Pour permettre à l'outil 16 de tronçonner le tuyau TA en travaillant dans les conditions optimales de coupe, on se contente de déplacer le galet porteur 6 sans modifier les positions relatives du galet porteur 2 et du galet presseur 5. Le galet fou 6 est déplacé par tout moyen approprié, par exemple par un vérin à vis non représenté, soit radialement vers l'axe X'-X' du tuyau TA, soit verticalement vers le haut, soit obliquement suivant une direction intermédiaire entre la direction verticale et la direction radiale, l'essentiel étant de rapprocher le galet 6 de l'axe X'-X' et d'amener l'axe X-X, dans le plan radial $P_{R1}$ contenant l'axe du galet 2 et l'arête de l'outil de coupe 16.

En variante, pour recevoir un tuyau TA de diamètre plus petit que le tuyau T de l'exemple précédent, on aurait pu maintenir fixes en position les galets 2 et 6 et modifier seulement la position du galet presseur 5, donc modifier la valeur de l'angle α de décalage entre le galet 5 et le plan radial $P_{R1}$. De par son basculement autour du tourillon 10, sous l'action du vérin 12, le galet 5 prendrait de lui-même la nouvelle position d'appui sur la paroi interne du tuyau TA.

A titre indicatif, on peut tronçonner avec le dispositif décrit un gamme de tuyaux dont les diamètres s'étendent d'environ 300 mm jusqu'à 1000 mm et au-delà.

La concentration des galets sous la partie inférieure du tuyau à tronçonner permet de réduire considérablement leur nombre et les dimensions de leur bâti de support, par rapport à un bâti entourant complètement le tuyau et muni de galets répartis sur le pourtour de ce dernier. Le seuil minimal acceptable pour le diamètre des tuyaux est évidemment imposé par la nécessité d'introduire le galet presseur 5 à l'intérieur dudit tuyau.

La réalisation du dispositif de tronçonnage est considérablement plus simple que le dispositif antérieur précité, comportant des galets extérieurs sur tout le pourtour du tuyau, et par conséquent moins onéreuse.

Par ailleurs, le léger décalage angulaire α entre les plans radiaux passant par l'axe du galet motorisé 2 jumelé à l'outil 16 et par l'axe du galet intérieur presseur 5, permet de bien maintenir le tuyau T appliqué contre les galets porteurs 2, 6, en évitant à la fois tout risque de rupture du tuyau, et de basculement de celui-ci vers l'extérieur par-dessus l'outil de coupe.

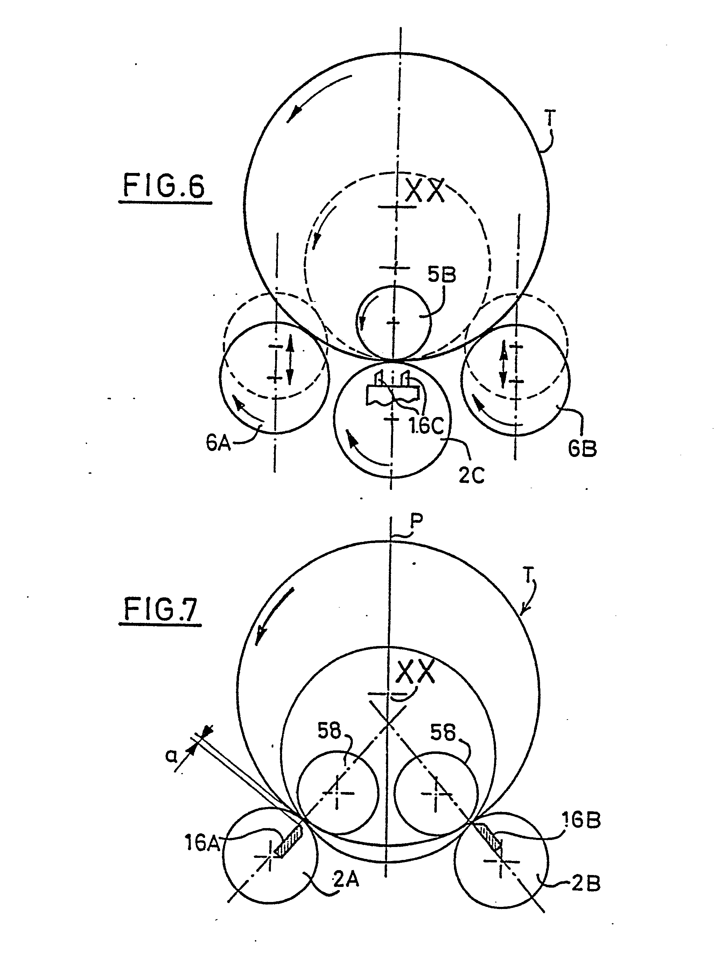

Une autre forme de réalisation du dispositif représenté à la Figure 7 diffère des précédentes par le fait qu'elle comporte deux galets porteurs motorisés 2A, 2B, jumelés chacun à un outil de coupe 16A, 16B de la même manière que le galet 2 et l'outil 16, ces éléments étant placés symétriquement par rapport à l'axe X-X de la pièce T et par rapport au plan vertical P contenant l'axe X-X. Complémentairement, le dispositif est muni de deux galets presseurs 58 intérieurs à la pièce T, légèrement décalés vers le plan vertical axial P de la pièce T, par rapport aux galets porteurs correspondants 2A, 2B. Chacun de ces décalages correspond à l'angle α défini en référence à la réalisation des Figures 1 à 5.

On remarquera que l'outil 16A est décalé radialement vers l'extérieur du tuyau T, d'une profondeur de passe a par rapport à l'outil 16B. Grâce à cet agencement, le temps de tronçonnage est divisé par deux.

Comme dans les variantes précédentes, il est possible de maintenir l'angle de coupe constant pour un diamètre donné, en faisant varier la position des outils 16A, 16B, soit manuellement, soit automatiquement.

Ce mode de réalisation permet de recevoir des tuyaux dont les diamètres sont compris à l'intérieur d'une fourchette d'accueil d'environ 800 à 1000 mm et est plus particulièrement utile au tronçonnage de parois tubulaires de forte épaisseur.

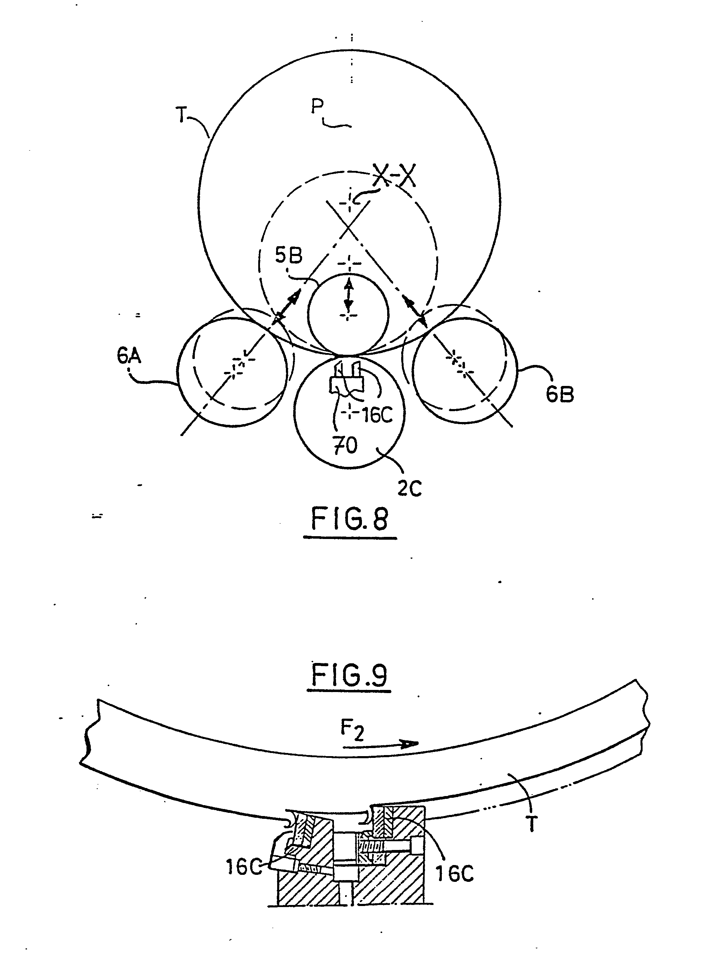

Dans un autre mode de réalisation illustré aux Figures 8 et 9, le dispositif comprend un galet inférieur fixe 2C, dont l'axe est dans le plan vertical axial P. Le galet porteur 2C est susceptible d'être entraîné en rotation par un motoréducteur non représenté, et il est jumelé à au moins un outil de coupe (deux outils 16C dans l'exemple représenté). Deux galets extérieurs latéraux 6A, 6B sont placés sous la pièce T, symétriquement par rapport au plan vertical axial P et au galet central 2C. La distance de ces galets 6A, 6B à l'axe X-X est réglable suivant une direction radiale, une direction verticale (variante de la Figure 6) ou bien une direction oblique intermédiaire entre la radiale et la verticale. Le dispositif est complété par un galet intérieur presseur 5B susceptible d'être entraîné en rotation, et dont l'axe est situé dans le plan vertical axial P.

Le montage des outils 16C dans leur support, représenté schématiquement à la Figure 9, est connu en soi et ne sera pas décrit en détail.

L'un des outils 16C, à savoir l'outil situé à droite sur les Figures 8 et 9, est décalé d'une certaine profondeur de passe vers l'axe X-X par rapport à l'autre outil 16C. Compte tenu du sens de rotation du tuyau T (flèche F2), cet agencement permet comme dans la variante de la Figure 7, de diviser par deux le temps d'une opération de tronçonnage.

Toutefois, contrairement à la variante de la Figure 7, la distance entre les deux outils 16C est limitée à la largeur de leur support commun 70, alors qu'elle correspond à l'entraxe des galets jumelés 2A et 2B dans la réalisation de la Figure 7. Les outils jumelés 16C sont jumelés radialement avec le galet porteur 2C en étant situés de part et d'autre du plan radial P, mais au voisinage de celui-ci. La distance du galet de support 6A (situé à environ 8 heures en considérant le cadran d'une montre), à l'axe X-X peut être réglée soit manuellement, soit automatiquement, par déplacement radial ou non, par exemple au moyen d'un vérin à vis, et ce en fonction du diamètre du tuyau à tronçonner, afin de bien répartir la profondeur de coupe ou de passe de chacun outils jumelés 16C.

Le second galet 6B (situé à environ 4 heures), permet grâce à un vérin (par exemple pneumatique), qui lui est associé, d'appliquer le tuyau T contre le galet 6A. Le galet 6B assure ainsi la stabilité latérale du tuyau T pendant sa rotation, tandis que le galet central 2C exerce une pression sur la paroi du tuyau T, qui est pris en sandwich entre ce galet 2C et le galet intérieur 5B, escamotable de la même façon que le galet 5. Les galets 5B et 2C sont motorisés en rotation, tandis que les galets 6A, 6B sont montés fous sur leurs axes. On notera que le galet 6B peut être déplacé aussi bien verticalement que radialement par rapport au tuyau T, l'essentiel étant que ce galet exerce sur le tuyau T une pression en cours de rotation, tendant à le maintenir appliqué sur le galet 6A pour assurer sa stabilité latérale.

Comme dans les réalisations précédentes, l'effort de pincement du galet 5B est assuré par un châssis basculant actionné par un vérin.

Par ailleurs, la progression des outils 16C dans la paroi du tuyau T s'effectue simultanément grâce à un seul porte-outil 70, donc grâce à un seul moyen de motorisation.

**Revendications**

1.- Procédé de tronçonnage d'une pièce tubulaire en matériau rigide tel qur fonte, acier, matière plastique, fibro-ciment, d'un diamètre minimal prédéterminé, supportée par un bâti (1) pourvu de galets destinés à recevoir l'extrémité à tronçonner de la pièce (T), des moyens étant prévus pour entraîner l'un des galets en rotation afin de faire tourner la pièce tubulaire (T) autour de son axe (X - X) tout en la maintenant fixe en translation, le tronçonnage étant exécuté au moyen d'au moins un outil de coupe (16) jumelé radialement à un galet (2), caractérisé en ce qu'on dispose des galets (2, 6) porteurs de la pièce (T) uniquement sous la partie inférieure de celle-ci en jumelant un au moins de ces galets avec un outil de coupe (16) à enlèvement de matière, et on maintient la pièce (T) appliquée sur ces galets (2, 6), pendant sa rotation et la coupe de son extrémité, au moyen d'au moins un galet (5) presseur introduit à l'intérieur de la pièce, en appui sur cette dernière, puis, après le tronçonnage, on escamote le galet intérieur (5) presseur pour dégager la pièce tronçonnée (T).

2.- Procédé selon la revendication 1, caractérisé en ce qu'on décale angulairement vers le bas le galet presseur (5) intérieur à la pièce à tronçonner par rapport au galet porteur (2) jumelé à l'outil de coupe (16), de façon que le plan radial ($P_{R1}$) passant par l'axe du galet porteur (2) soit distant d'un angle prédéterminé ($\alpha$) du plan radial ($P_{R2}$) passant par l'axe du galet inrérieur (5), le galet intérieur (5) étant situé entre le plan axial vertical (P) de la pièce (T) et le plan radial ($P_{R1}$) passant par l'axe du galet porteur (2) jumelé à l'outil (16).

3.- Dispositif de tronçonnage d'une pièce tubulaire, destiné à la mise en oeuvre du procédé selon l'une des revendications 1 et 2, comprenant un bâti (1) fixe sur lequel sont montés des galets (2, 6) de support de la pièce tubulaire (T) disposée horizontalement, dont au moins un (2) est jumelé radialement à un outil de coupe à enlèvement de matière (16) de la pièce et relié à des moyens (3) d'entraînement en rotation, afin de faire tourner la pièce autour de son axe (X-X) et restant fixe en translation, caractérisé en ce que, en combinaison, les galets de support (2, 6) sont disposés uniquement sous la partie inférieure de la pièce (T) à tronçonner, et il est prévu au moins un galet presseur (5) de maintien de la pièce tubulaire en appui sur les galets porteurs (2, 6), disposé intérieurement à ladite pièce et appliqué contre celle-ci, ce galet (5) étant monté sur un châssis (7) pivotant qui permet de l'escamoter à l'extérieur de la pièce tubulaire (T) après tronçonnage de cette dernière.

4.- Dispositif selon la revendication 3, caractérisé en ce que le galet intérieur (5) de guidage est placé entre les deux galets extérieurs (2, 6) de support de la pièce (T) et à une faible distance angulaire ($\alpha$) du galet (2) jumelé avec l'outil de coupe (16), de façon que le plan radial ($P_{R1}$) passant par l'axe (X-X) de la pièce tubulaire (T) et par l'axe du galet porteur (2) soit écarté de ladite distance angulaire du plan radial ($P_{R2}$) passant par l'axe du galet intérieur (5) de guidage, ledit plan radial ($P_{R2}$) étant situé entre le plan vertical axial (P) de la pièce (T) et le plan radial ($P_{R1}$) passant par les axes (X - X) de la pièce (T) et du galet porteur (2).

5.- Dispositif selon l'une des revendications 3 ou 4, caractérisé en ce que le galet intérieur (5) est accouplé à un motoréducteur (8) d'entraînement en rotation, monté sur le châssis (7) de support, lequel est articulé sur un socle (9) autour d'un axe horizontal (10) perpendiculaire à l'axe (X-X) de la pièce tubulaire (T), ce châssis (7) étant susceptible de pivoter autour dudit axe (10) au moyen d'un vérin (12), articulé d'une part sur le socle (9) et d'autre part sur un levier (11) solidaire du châssis.

6.- Dispositif selon l'une des revendications 3 à 5, caractérisé en ce que le galet porteur (2) jumelé à l'outil de coupe (16) est accouplé à un moteur (3) d'entraînement en rotation, tandis que le second galet porteur (6), placé de l'autre côté du galet porteur (2) par rapport au plan vertical axial (P) de la pièce tubulaire (T), est monté fou à distance réglable de l'axe (X - X) de la pièce tubulaire (T), de façon manuelle ou automatique, afin de permettre l'adaptation du dispositif à des pièces tubulaires de diamètres différents.

7.- Dispositif selon l'une des revendications 3 à 6, caractérisé en ce qu'il comporte deux galets porteurs motorisés (2A, 2B), jumelés chacun à un outil de coupe (16A, 16B) et placés symétriquement par rapport à l'axe (X - X) de la pièce (T) à tronçonner, et deux galets presseurs motorisés (58) intérieurs à la pièce, légèrement décalés vers le plan vertical axial (P) de la pièce (T), par rapport aux galets porteurs correspondants (2A, 2B).

8.- Dispositif selon l'une des revendications 3 à 6, caractérisé en ce qu'il comprend un galet inférieur fixe (2C) dont l'axe est dans le plan vertical axial (P) de la pièce (T), susceptible d'être entraîné en rotation et jumelé à au moins un outil de coupe et de préférence deux (16C), deux galets extérieurs latéraux (6A, 6B) fous de support de la pièce (T) à distance réglable de l'axe (X - X) de la pièce, et un galet interieur presseur (58), susceptible d'être entraîné en rotation dont l'axe est dans le plan vertical axial (P) de la pièce tubulaire.

**Patentansprüche**

1. Verfahren zum Abtrennen eines Rohrstücks aus starrem Material, wie Gußeisen, Stahl, Kunststoff, Faserzement, das eine gegebenen Mindestdurchmesser aufweist, und von einem Gestell (1) mit Rollen getragen wird, die das abzutrennende Ende des Stücks (T) aufnehmen sollen, wobei Mittel vorgesehen sind zum drehenden Antreiben einer der Rollen, um das Rohrstück (T) um seine Achse (X-X) zu drehen, während es gegen Verschiebung festgehalten wird, wobei das Abtrennen durch weingstens ein Schneidwerkzeug (16) erfolgt, das radial mit einer Rolle (2) gekoppelt est,
dardurch gekennzeichnet, daß man die Tragrollen (2, 6) des Stücks (T) nur unter dessen Unterteil anordnet und wenigstens eine dieser Rollen mit einem spanabhebend arbeitenden Schneidwerkzeug (16) gekoppelt ist, und daß man das Stück (T) während seiner Drehung und des Abschneidens seines Endes durch wenigstens eine in den Innenraum des Stücks eingeführte Andrückrolle in Anlage an diesem Stück hält, wonach man im Anschluß an das Abtrennen die innere Andrückrolle (15) wegzieht, um das abgetrennte Stück (T) freizugeben.

2. Verfahren nach Anspruch 1,
dadurch gekennzeichnet,
daß man die innerhalb des abzutrennenden Stücks angeordnete Andrücksrolle (5) gegenübner der mit dem Schneidwerkzeug (16) gekoppelten Tragrolle (2) im Winkel derart verschiebt, daß die durch die Achse der Tragrolle (2) hindurchgehende radiale Ebene ($P_{R1}$) von der durch die Ache der inneren Rolle (5) hindurchgehenden radialen Ebene ($P_{R2}$) im einen gegenbenen Winkel ($\alpha$) beabstandet ist, wobei die innere Rolle (5) sich zwischen der senkrechten axialen Ebene (P) des Stücks (T) und der radialen Ebene ($P_{R1}$) befindet, die durch die Achse der mit dem Werkzeug (16) gekoppelten Tragrolle (2) hindurchgeht.

3. Vorrichtung zum Abtrennen eines Rohrstücks zur Durchführung des Verfahrens nach einem der Ansprüche 1 und 2, mit einem feststehenden Gestell (1), an dem für das waagerecht angeordnete Rohrstück (T) Tagrollen (2, 6) gelagert sind, von denen wenigstens eine (2) radial mit einem spanabhebend arbeitenden Schneidwerkzeug (16) für das Stück gekoppelt und mit einer drehend antreibenden Einrichtung (3) verbunden ist, um das Stück um seine Achse (X-X) zu drehen, das gegen Verschieben festbleibt,
dadruch gekennzeichnet,
daß in Kombination Tragrollen (2, 6) ausschließlich unter dem Unterteil des abzutrennenden Stücks (T) angeordnet sind, und
daß wenigstens eine Andrückrolle (5) vorgesehen ist, die das Rohrstück in Anlage an den Tragrollen (2, 6) hält, innerhalb dieses Stücks angeordnet ist und gegen dieses drückt, wobei diese Rolle (5) an einem Schwenkarm (7) gelagert ist, der sich nach dem Abtrennen des Rohrstücks (T) aus diesem zurückziehen kann.

4. Vorrichtung nach Anspruch 3,
dadurch gekennzeichnet,
daß die innere Führungsrolle (5) zwischen zwei äußeren Tragrollen (2, 6) des Stücks (T) und in geringem Winkelabstand ($\alpha$) von der mit dem Schneidwerkzeug (16) gekoppelten Rolle (2) derart angeordnet ist, daß die durch die Achse (X-X) des Rohrstücks (T) und durch die Aschse der Tragrolle (2) hindurchgehende radiale Ebene ($P_{R1}$) um denseleben Winkelabstand von der durch die Achse der inneren Rolle (5) hindurchgehenden radialen Ebene ($P_{R2}$) beabstandet ist, wobei die radiale Ebene ($P_{R2}$) sich zwischen der axialen senkrechten Ebene (P) des Stücks (T) und der radialen Ebene ($P_{R1}$) befindet, die durch die Achsen (X-X) des Stücks (T) und der Tragrolle (2) hindurchgeht.

5. Vorrichtung nach einem der Ansprüche 3 oder 4,
dadurch gekennzeichnet,
daß die innere Rolle (5) einen drehend antreibenden Motoruntersetzungsgetriebe (8) verbunden ist, das am Tragrahmen (7) montiert ist, der an einem Sockel (9) über eine Asche (10) angelenkt ist, die zur Achse (X-X) des Rohrstücks (T) senkrecht ist, wobei dieser Rahmen (7) und diese Achse (10) mittels eines Stellzylinders (12) verschwenkbar ist, der einerseits am Sockel (9) und andererseits an einem mit dem Rahmen fest verbunden Hebel (11) angelenkt ist.

6. Vorrichtung nach einem der Ansprüche 3 bis 5,

dadurch gekennzeichnet,

daß die mit dem Schneidwerkzeug (16) gekoppelte Tragrolle (2) mit einem drehend antreibenden Motor (3) verbunden ist, während die zweite Tragrolle (6), die auf der gegenüber der senkrechten axialen Ebene (P) des Rohrstücks (T) anderen Seite der Tragrolle (2) angeordnet ist, mit von Hand oder automatisch einstellbaren Abstand von der Achse (X-X) des Rohrstücks (T) lose gelagert ist, um die Anpasung der Vorrichtung an Rohrstücke mit unterschiedlichem Durchmesser zu ermöglichen.

7. Vorrichtung nach einem der Ansprüche 3 bis 6,

dadurch gekennzeichnet,

daß sie folgendes aufweist: zwei motorgetriebene Tragrollen (2A, 2B), die jeweils mit einem Schneidwerkzeug (16A, 16B) gekoppelt und gegenüber der Achse (X-X) des abzutrennenden Stücks (T) symmetrisch angeordnet sind, und zwei motorgetriebene und innerhalb des Stücks angeordnete Andrückrollen (58), die gegenüber den entsprechenden Tragrollen (2A, 2B) zur axialen senkrechten Ebene (P) des Stücks (T) leicht versetzt sind.

8. Vorrichtung nach einem der Ansprüche 3 bis 6,

dadurch gekennzeichnet,

daß sie folgendes aufweist: eine feststehende innere Rolle (2C), deren Achse in der axialen senkrechten Ebene (P) des Stücks (T) liegt, die drehend angetrieben werden kann und mit wenigstens einem Schneidwerkzeug, vorzugsweise zwei Schneidwerkzeugen (16C), gekoppelt werden kann, zwei lose seitliche und äußere Tragrollen (6A, 6B) für das Stück (T) mit einstellbaren Abstand von der Achse (X-X) des Stücks, und eine drehend antreibbare innere Andrückrolle (5B), deren Achse in der axialen senkrechten Ebene (P) des Rohrstücks liegt.

**Claims**

1. Method for cutting a tubular member into sections, the said member consisting of a rigid material such as cast-iron, steel, plastics material, fibro-cement, of a predetermined mimimium diameter, supported by a frame (1) provided with rollers intended to receive the end of the member (T) to be cut off, means being provided for setting one of the rollers in rotation in order to rotate the tubular member (T) about its axis (X-X) whilst preventing it from moving longitudinally, cutting into sections being carried out by means of at least one cutting tool (16) paired radially with a roller (2), characterised in that rollers (2, 6) supporting the member (T) are disposed solely beneath the lower part of the latter by pairing at least one of these rollers with a cutting tool (16) for removing material and the member (T) is kept pressed against these rollers (2, 6) during its rotation and the cutting-off of its end, by means of at least one pressing roller (5) introduced inside the member, pressing against the latter, then, after cutting-off, the inner pressing roller (5) is removed in order to release the cut-off member (T)

2. Method according to claim 1, characterised im that the pressing roller (5) inside the member to be cut into sections is offset angularly downwards with respect to the support roller (2) paired with the cutting tool (16), so that the radial plane $(P_{R1})$ passing through the axis of the support roller (2) is separated by a predetermined angle ($\alpha$) from the radial plane $(P_{R2})$ passing through the axis of the inner roller (5), the inner roller (5) being situated between the vertical axial plane (P) of the member (T) and the radial plane $(P_{R1})$ passing through the axis of the support roller (2) paired with the tool (16).

3. Apparatus for cutting a tubular member into sections, intended for carrying out the method according to one of claims 1 and 2, comprising a fixed frame (1) on which are mounted rollers (2, 6) for supporting the tubular member (T) arranged horizontally, whereof at least one (2) is paired radially with a cutting tool (16) for removing material from the member and connected to rotary drive means (3), in order to rotate the member about its axis (X-X) while remaining stationary in the longitudinal direction, characterised in that, in combination, the support rollers (2, 6) are arranged solely beneath the lower part of the member (T) to be cut into sections and at least one pressing roller (5) is provided for keeping the tubular member pressed against the support rollers (2, 6), arranged inside the said member and pressed against the latter, this roller (5) being mounted on a pivoting frame (7) which makes it possible to retract it outside the tubular member (T) after cutting a section from the latter.

4. Apparatus according to claim 3, characterised in that the inner guide roller (5) is located between the two outer rollers (2, 6) for supporting the member (T) and at a slight angular distance ($\alpha$) from the roller (2) paired with the cutting tool (16), so that the radial plane $(P_{R1})$ passing through the axis (X-X) of the tubular member (T) and through the axis of the support roller (2) is separated by the said angular distance from the radial plane $(P_{R2})$ passing through the axis of the inner guide roller (5), the said radial plane $(P_{R2})$ being situated between the axial vertical plane (P) of the member (T) and the radial plane $(P_{R1})$ passing through the axes (X-X) of the member (T) and of the support roller (2).

5. Apparatus according to one of claims 3 or 4, characterised in that the inner roller (5) is connected to a rotary drive speed-reduction unit (8), mounted on the support frame (7), which is pivoted on a stand (9) about a horizontal shaft (10) perpendicular to the axis (X-X) of the tubular member (T), this frame (7) being able to pivot about the said shaft (10) by means of a jack (12), pivoted at one side on the stand (9) and at the other side on a lever (11) integral with the frame.

6. Apparatus according to one of claims 3 to 5, characterised in that the supportroller (2) paired with the cutting tool (16) is connected to a rotary drive motor (3), whereas the second support roller (6), located on the other side of the support roller (2) with respect to the vertical axial plane (P) of the tubular member (T), is mounted loosely at an adjustable distance from the axis (X-X) of the tubular member (T), manually or automatically, in order to allow the adaptation of the apparatus to tubular members of different diameters.

7. Apparatus according to one of claims 3 to 6, characterised im that it comprises two motorised support rollers (2A, 2B), each paired with a cutting tool (16A, 16B) and located symmetrically with respect to the axis (X-X) of the member (T) to be cut into sections and two motorised pressing rollers (5B) inside the member, slightly offset towards the axial vertical plane (P) of the member (T), with respect to the corresponding support rollers (2A, 2B).

8. Apparatus according to one of claims 3 to 6, characterised in that it comprises a fixed lower roller (2C) whereof the axis is in the axial vertical plane (P) of the member (T), able to be set in rotation and paired with at least one cutting tool and preferably two (16C), two loose outer side rollers (6A, 6B) supporting the member (T) at an adjustable distance from the axis (X-X) of the member and an inner pressing roller (5B) able to be set in rotation, the axis of which is in the axial vertical plane (P) of the tubular member.

FIG.1

FIG.2A

FIG.2

FIG.3

0113419

FIG.10

FIG.4

FIG.5

FIG.6

FIG.7

FIG.8

FIG.9